# FASCICULE DE BREVET EUROPEEN

(11) **EP 3 343 427 B1**
(45) Date de publication et mention de la délivrance du brevet: **30.09.2020**
(21) Numéro de dépôt: 17186781.5
(22) Date de dépôt: 18.08.2017
(51) Int. Cl.: G06F 21/75, G06K 19/073

(54) **PROCÉDÉ ET DISPOSITIF DE GESTION DE LA CONSOMMATION EN COURANT D'UN MODULE INTÉGRÉ**
VERFAHREN UND VORRICHTUNG ZUR STEUERUNG DES STROMVERBRAUCHS EINES INTEGRIERTEN MODULS
METHOD AND DEVICE FOR MANAGING THE POWER CONSUMPTION OF AN INTEGRATED MODULE

(30) Priorité: 03.01.2017 FR 1750027
(43) Date de publication de la demande: 04.07.2018
(73) Titulaire: STMicroelectronics (Rousset) SAS, 13790 Rousset (FR)
(72) Inventeur: SARAFIANOS, Alexandre, 83910 Pourrieres (FR); ORDAS, Thomas, 83470 Pourcieux (FR); LINGE, Yanis, 13710 Fuveau (FR); FORT, Jimmy, 13114 Puyloubier (FR)
(74) Mandataire: Casalonga

(56) Documents cités:
- FR-A1- 2 796 738
- US-B1- 6 419 159
- US-B2- 9 342 685

## Description

Des modes de mise en œuvre et de réalisation de l'invention concernent les circuits intégrés, et notamment mais non exclusivement ceux comportant des circuits logiques, et en particulier la gestion de la consommation en courant de ce type de circuit en fonctionnement, par exemple en vu de masquer cette consommation de courant.

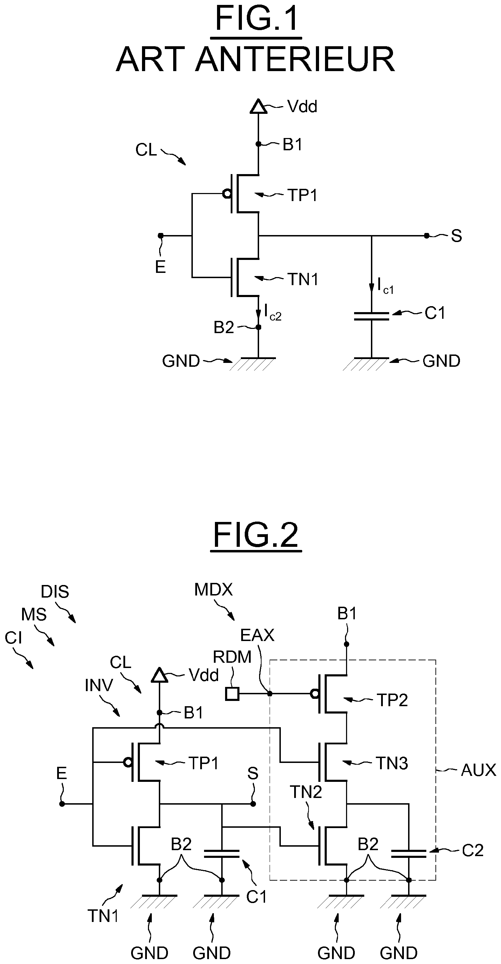

La figure 1 illustre un circuit logique CL de type inverseur couplé entre une première borne Bl, destinée à recevoir une tension d'alimentation Vdd, et une deuxième borne B2, destinée à recevoir une tension de référence, par exemple ici la masse GND. Le circuit logique comprend classiquement une borne d'entrée E et une borne de sortie S.

La borne de sortie S peut être ici couplée à l'entrée d'un autre composant du circuit intégré CI (non-représenté), par exemple à un autre inverseur. Ce couplage peut générer des capacités parasites, dues par exemple aux capacités de grille des transistors de l'autre inverseur.

Sur la figure 1, cette capacité parasite est représentée par un premier condensateur C1.

Le circuit logique CL comporte classiquement un transistor NMOS TN1 couplé en série avec un transistor PMOS TP1 entre la première borne B1 et la deuxième borne B2. La borne d'entrée E du circuit logique est couplée aux grilles des deux transistors, et la borne de sortie S est couplée au nœud commun aux deux transistors, ici le nœud commun au drain du transistor PMOS TP1 et au drain du transistor NMOS TN1.

Ainsi, lors de la transition du signal présent sur la borne d'entrée E d'un état haut vers un état bas, le transistor PMOS TP1 devient passant et le transistor NMOS TN1 devient bloqué. Le condensateur C1 se charge alors grâce au courant I_{C1} circulant au travers du transistor PMOS TP1. Le temps de charge du condensateur étant très court, ce courant peut être assimilé à un pic de courant de charge I_{C1}.

De plus, la commutation simultanée des deux transistors crée pendant un court intervalle de temps un court-circuit entre les bornes B1 et B2. Cet intervalle de temps est d'autant plus important que la commutation est lente. Ainsi, à chaque commutation, un pic de courant de court circuit Ic₂ circule entre la première borne B1 et la deuxième borne B2 au travers des deux transistors TP1 et TN1.

Le pic de courant généré lors d'une transition du signal délivré par la borne de sortie S d'un état bas vers un état haut peut avoir une valeur différente de celle du pic de courant généré lors d'une transition d'un état haut vers un état bas.

Lors d'une transition du signal présent sur la borne d'entrée E d'un état haut vers un état bas, le circuit logique CL consomme un courant supérieur à celui qu'il consomme lors d'une transition d'un état bas vers un état haut, puisque dans le premier cas le courant consommé est la somme du courant de charge Ic₁ du condensateur C1 et du courant de court-circuit et dans le deuxième cas le courant consommé correspond seulement au courant de court-circuit Ic₂.

Ainsi, en analysant la consommation en courant d'un circuit intégré comportant une des portes logiques, à l'aide par exemple d'une sonde électromagnétique et d'algorithmes dédiés, il est possible d'obtenir des informations sur les opérations effectuées ainsi que sur les données manipulées et/ou sur leurs occurrences.

Il est donc recommandé de masquer autant que possible la consommation en courant du circuit intégré.

Il existe des solutions pour masquer la consommation en courant d'un circuit intégré, comme par exemple la technique du double rail (« Dual rail technique » en langue anglaise) qui lisse la consommation en courant d'un circuit intégré en générant un courant complémentaire au courant de consommation réel des circuits logiques du circuit.

Cela étant cette solution est contraignante puisqu'elle implique de masquer également la consommation en courant de portes logiques dont il n'est pas nécessaire de masquer la consommation. Par ailleurs, cette technique est coûteuse en surface, puisqu'elle nécessite de doubler le nombre de portes logiques du circuit intégré. US6419159 divulgue un procédé de gestion de la consommation en courant d'un circuit logique.

Ainsi, selon un mode de réalisation, il est proposé de masquer la consommation en courant d'un circuit logique incorporé au sein d'un circuit intégré, en utilisant des moyens simples permettant de focaliser le masquage sur le circuit logique.

Selon un aspect, il est proposé un procédé de gestion de la consommation en courant d'un circuit logique alimenté entre une première borne et une deuxième borne et comportant au moins une borne de sortie, dans lequel on génère ou non aléatoirement un courant supplémentaire entre la première borne et la deuxième borne lorsque le signal délivré par ladite au moins une borne de sortie du circuit logique change d'état.

Selon un autre aspect, il est proposé un dispositif électronique comprenant au moins un circuit logique qui comporte une première borne destinée à recevoir une tension d'alimentation, une deuxième borne destinée à recevoir une tension de référence, et au moins une borne de sortie, la borne de sortie étant configurée pour délivrer un signal pouvant être dans un état haut ou dans un état bas.

Ce dispositif comprend au moins un circuit auxiliaire couplé entre la première borne et la deuxième borne et configuré pour générer ou non de façon aléatoire un courant supplémentaire entre la première borne et la deuxième borne à chaque changement d'état du signal sur la borne de sortie.

Ainsi, la consommation en courant du circuit logique est masquée par la génération aléatoire d'un courant supplémentaire qui s'apparente à du bruit, et il est plus difficile de déduire les opérations effectuées par le circuit logique par une analyse de sa consommation en courant. Le circuit intégré qui incorpore ce circuit logique peut ainsi par exemple être protégé contre les analyses par canaux auxiliaire (« Side Channel Analysis » selon la dénomination anglo-saxonne bien connue de l'homme du métier).

De plus, en couplant le module auxiliaire au circuit logique, on s'affranchit de la réalisation d'un masquage global de la consommation en courant du circuit intégré. En particulier, il est possible de réaliser un circuit intégré comportant une pluralité de circuits logiques dans lequel seuls certains circuits logiques sont couplés à un module auxiliaire, et ont donc une consommation en courant masquée.

Selon une variante de réalisation, ce circuit logique comporte au moins une borne d'entrée, et le circuit auxiliaire comporte une borne d'entrée auxiliaire configurée pour recevoir un signal pseudo-aléatoire et comprend un premier transistor auxiliaire dont l'électrode de commande est couplée à la borne d'entrée auxiliaire et dont une première électrode est couplée à la première borne, au moins un deuxième transistor auxiliaire dont l'électrode de commande est couplée à la sortie du circuit logique, et au moins un transistor intermédiaire couplé entre le premier transistor auxiliaire et ledit au moins un deuxième transistor auxiliaire et dont l'électrode de commande est couplée à ladite au moins une entrée.

Par exemple, ledit au moins un circuit logique peut être un inverseur.

Selon une autre variante de réalisation applicable à un circuit logique comportant plusieurs entrées, le circuit auxiliaire comporte plusieurs transistors intermédiaires, chaque transistor intermédiaire ayant sa grille couplée à une entrée distincte du circuit logique.

Ainsi, le dispositif est compatible avec différents type de circuit logique.

Les transistors intermédiaires peuvent être connectés en série entre le premier transistor auxiliaire et le deuxième transistor auxiliaire.

Ledit au moins un circuit logique peut comporter une porte logique NON-ET, et le circuit auxiliaire comporte alors un premier transistor intermédiaire dont l'électrode de commande est couplée à une première borne d'entrée de la porte NON-ET et un deuxième transistor intermédiaire dont l'électrode de commande est couplée à une deuxième borne d'entrée de la porte NON-ET, le premier transistor auxiliaire, le deuxième transistor auxiliaire, le premier transistor intermédiaire et le deuxième transistor intermédiaire étant montés en série entre la première borne et deuxième borne.

Le circuit auxiliaire peut comprendre un troisième transistor auxiliaire dont l'électrode de commande est couplée à la borne d'entrée auxiliaire, et les transistors intermédiaires ont une première électrode mutuellement couplée et sont respectivement couplés en série avec les premier et troisième transistors auxiliaires.

Selon un autre mode de réalisation, ledit au moins un circuit logique comporte une porte NON-OU, et le dispositif comporte le premier transistor intermédiaire connectés en série avec le premier transistor auxiliaire et dont l'électrode de commande est couplée à une première entrée de la porte NON-OU, un deuxième transistor intermédiaire dont l'électrode de commande est couplée à une deuxième entrée de la porte NON-OU et monté en série avec le troisième transistor auxiliaire dont l'électrode de commande est couplée au générateur de signal pseudo-aléatoire, le premier transistor auxiliaire et le premier transistor intermédiaire étant connectés en parallèle avec le troisième transistor auxiliaire et le deuxième transistor intermédiaire entre la borne d'alimentation et le premier transistor intermédiaire.

Le dispositif peut comprendre plusieurs modules connectés.

Selon un autre aspect, il est proposé un circuit intégré comprenant un dispositif tel que décrit précédemment.

Selon un autre aspect, il est proposé un système comprenant au moins un circuit intégré, le système pouvant par exemple former une carte à puce ou un appareil informatique.

Le premier transistor auxiliaire et le troisième transistor auxiliaire peuvent être des transistors PMOS, et le deuxième transistor et les transistors intermédiaires peuvent être des transistors NMOS.

Selon un autre aspect, il est proposé un système comprenant un circuit intégré, le système pouvant être une carte à puce ou un système informatique.

D'autres avantages et caractéristiques de l'invention apparaitront à l'examen de la description détaillée de modes de mise en œuvre et de réalisation de l'invention, nullement limitatifs, et des dessins annexés sur lesquels :
- la figure 1, décrite précédemment, illustre un circuit logique inverseur classique,
- les figures 2 à 8 illustrent des modes de mise en œuvre et de réalisation de l'invention.

La figure 2 illustre schématiquement d'un point de vue électrique un circuit intégré CI comportant un dispositif électronique incorporant un module MS contenant un circuit logique CL comportant une borne d'entrée E et une borne de sortie S et couplée à un module auxiliaire MDX.

Le circuit logique CL et le module auxiliaire MDX sont tous les deux couplés entre une première borne B1 destinée à recevoir une tension d'alimentation Vdd, et une deuxième borne B2 destinée à recevoir une tension de référence, par exemple ici la masse GND.

Le circuit logique CL est ici un inverseur INV qui comporte classiquement un premier transistor PMOS TP1 et un premier transistor NMOS TN2 montés en série entre la première borne B1 et la deuxième borne B2.

L'inverseur INV comporte la borne d'entrée E, couplée à la grille du premier transistor PMOS TP1 et à la grille du premier transistor NMOS TN1, et la borne de sortie S couplée entre le premier transistor NMOS TN1 et le premier transistor PMOS TP1.

La borne de sortie S peut être ici couplée à l'entrée d'un autre composant du circuit intégré CI (non-représenté), par exemple à un autre inverseur. Ce couplage peut générer des capacités parasites, dues notamment à la capacité de grille de l'autre inverseur. Sur la figure 1, cette capacité parasite est représentée par un premier condensateur C1.

Le module auxiliaire MDX comporte un circuit auxiliaire AUX comportant une entrée auxiliaire EAX, et un générateur de signal pseudo-aléatoire RDM couplé à l'entrée auxiliaire EAX du circuit auxiliaire AUX.

Le générateur de signal pseudo-aléatoire RDM, de structure classique et connue en soi, est configuré pour générer un signal pouvant être aléatoirement dans un état haut ou dans un état bas. Ce générateur RDM peut être spécifique au module MS, ou être commun à d'autres modules du circuit intégré.

Le circuit auxiliaire AUX comporte ici un premier transistor auxiliaire TP2, ici un transistor PMOS, et un deuxième transistor auxiliaire TN2, ici un transistor NMOS, couplés en série entre la première borne B1 et la deuxième borne B2.

Un premier transistor intermédiaire TN3, ici un transistor NMOS, est couplé entre le premier transistor auxiliaire TP2 et le deuxième transistor auxiliaire TN2.

La grille du premier transistor intermédiaire TN3 est couplée à la borne d'entrée E de l'inverseur INV, et la grille du deuxième transistor auxiliaire TN2 est couplée à la borne de sortie S de l'inverseur INV.

La grille du premier transistor auxiliaire TP2 forme l'entrée auxiliaire EAX et est donc couplée au générateur de signal pseudo-aléatoire RDM.

Le circuit auxiliaire AUX est ici couplé à un autre module du circuit intégré CI, par exemple à un inverseur (non représenté), et ce couplage peut générer une capacité parasite représentée sur la figure 2 par un deuxième condensateur C2.

Initialement, la borne d'entrée E du circuit intégré reçoit un signal à l'état haut, par exemple une tension de valeur 3 volts, le premier transistor PMOS TP1 est donc bloqué, et le premier transistor NMOS TN1 est passant.

La borne de sortie S délivre alors un signal à l'état bas, par exemple une tension nulle. Le deuxième transistor auxiliaire TN2 est donc dans un état bloqué.

Et, puisque le premier transistor intermédiaire TN3 est couplé à la borne d'entrée E, il est dans un état passant.

Lors d'une première transition, c'est-à-dire lorsque le signal sur l'entrée E passe dans un état bas, alors le premier transistor PMOS TP1 passe dans un état passant et le premier transistor NMOS TN1 passe dans un état bloqué. Le signal délivré par la borne de sortie S passe donc d'un état bas à un état haut.

Le premier condensateur C1 se charge alors grâce à la circulation d'un premier pic de courant de charge circulant entre la première borne B1 et la masse GND, au travers du premier transistor PMOS TP1 et du premier condensateur C1.

Et, la commutation simultanée du premier transistor NMOS TN1 et du premier transistor PMOS TP1 entraine la circulation d'un premier pic de courant de court-circuit entre la première borne B1 et la deuxième borne B2, au travers du premier transistor PMOS TP1 et du premier transistor NMOS TN1.

Et lors d'une deuxième transition, c'est à dire lorsque le signal sur la borne d'entrée E passe de nouveau dans un état haut, alors le premier transistor PMOS TP1 passe dans un état bloqué et le premier transistor NMOS TN1 passe dans un état passant. Le signal délivré par la borne de sortie S passe alors d'un état haut à un état bas.

Le premier condensateur C1 se décharge alors au travers du premier transistor NMOS TN1.

Et de nouveau, la commutation simultanée du premier transistor NMOS TN1 et du premier transistor PMOS TP1 entraine la circulation d'un deuxième pic de courant de court-circuit, entre la première borne B1 et la deuxième borne B2, au travers du premier transistor PMOS TP1 et du premier transistor NMOS TN1.

Ainsi, lors de la première transition, le circuit logique CL consomme un courant égal à la somme du premier pic de courant de charge et du premier pic de courant de court circuit, et lors de la deuxième transition, le circuit logique CL consomme un courant plus faible, égal au deuxième pic de courant de court-circuit.

Lors d'une analyse par canaux auxiliaires, cette différence de consommation permet l'analyse du comportement du circuit en l'absence du circuit auxiliaire AUX.

La présence de ce circuit auxiliaire va permettre de masquer la consommation du circuit logique CL comme cela va maintenant être expliqué.

Lors de la deuxième transition, le premier transistor intermédiaire TN3 étant couplé à la borne d'entrée E, il passe dans un état passant.

Le deuxième transistor auxiliaire TN2, dont la grille est couplée à la borne de sortie S, passe dans un état bloqué.

La grille du premier transistor auxiliaire TP2 étant couplée au générateur de signal pseudo-aléatoire RDM, le premier transistor auxiliaire TP2 peut soit changer d'état si le signal généré par le générateur RDM change d'état, par exemple en passant d'un état haut à un état bas ou d'un état bas à un état haut, soit conserver sont état si le signal généré par le générateur RDM ne change pas d'état.

Et, si le premier transistor auxiliaire TP2 change d'état, alors la commutation simultanée du premier transistor auxiliaire TP2, du deuxième transistor auxiliaire TN2 et du premier transistor intermédiaire TN3 entraîne la circulation d'un troisième pic de courant entre la première borne B1 et la deuxième borne B2, au travers de ces trois transistors.

Si ce changement d'état correspond à un passage de l'état bloqué à l'état passant, alors un deuxième pic de courant de charge circule entre la première borne B1 et la masse de façon à charger le deuxième condensateur C2.

Si le signal délivré par le générateur de signal pseudo aléatoire conserve un état haut, alors le premier transistor auxiliaire TP2 était dans un état bloqué et reste dans un état bloqué, et aucun pic de courant ne circule dans le circuit auxiliaire AUX.

Si le signal délivré par le générateur de signal pseudo-aléatoire RDM conserve un état bas, alors le premier transistor auxiliaire TP2 conserve son état passant, et la commutation simultanée du deuxième transistor auxiliaire TN2 et du premier transistor intermédiaire TN3 génère un quatrième pic de courant de court circuit entre la première borne B1 et la deuxième borne B2.

Ainsi, lors de la deuxième transition, c'est-à-dire lorsque le signal délivré par la borne de sortie S passe d'un état haut vers un état bas, on génère aléatoirement
- un pic de courant égal à la somme du deuxième pic de courant de charge et du troisième pic de courant de court-circuit,
- le quatrième pic de courant, ou
- aucun pic de courant.

La consommation en courant du circuit logique CL est donc masquée, et il est plus difficile pour un attaquant extérieur de déterminer la nature des opérations effectuées par le module MS du circuit CI par l'étude de la consommation en courant.

Lors de la première transition, c'est-à-dire lorsque le signal délivré sur la borne de sortie S passe d'un état bas vers un état haut, seuls des pics de courant de court-circuit sont générés par le circuit auxiliaire AUX.

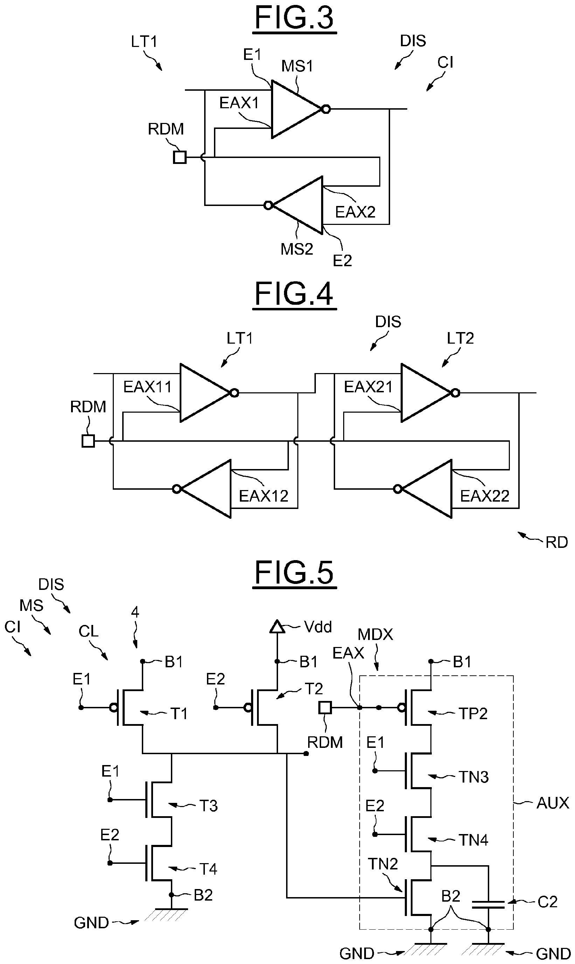

Le mode de réalisation de l'invention décrit précédemment est compatible avec des circuits logiques séquentiels. En particulier, la figure 3 illustre un verrou LT1 (« Latch » en langue anglaise) comportant deux modules MS1 et MS2 ayant une structure analogue à celle décrite précédemment en lien avec la figure 2.

Le premier module MS1 et le deuxième module MS2 comportent chacun respectivement une entrée E1 et E2 et une entrée auxiliaire EAX1 et EAX2.

Sur la figure 3, chaque module MS1, MS2 est représenté par un symbole d'inverseur classique comprenant une entrée auxiliaire EAX1 et EAX2 couplée au générateur de signal pseudo-aléatoire RDM commun aux deux inverseurs.

Comme illustré sur la figure 4, il serait également possible de coupler une pluralité de verrou LT1, LT2 en série de façon à former un registre à décalage RD et en conservant un seul générateur de signal pseudo aléatoire commun connecté aux entrée EAX11, EAX12, EAX21 et EAX22, ou en utilisant un générateur de signal pseudo-aléatoire différents pour chaque entrée.

Il serait également envisageable d'utiliser un générateur pseudo-aléatoire à plusieurs bits parallèle respectivement affectés aux différents verrous de façon à augmenter d'avantage la complexité du bruit.

La figure 5 illustre un mode de réalisation dans lequel le circuit logique CL est une porte NON-ET 4, comportant une première borne d'entrée E1 et une deuxième borne d'entrée E2.

La porte NON-ET 4 comporte classiquement deux transistors PMOS T1 et T2 couplés en parallèle, le couple de transistors T1 et T2 étant montés en série avec deux transistors NMOS T3 et T4 entre la première borne B1 et la deuxième borne B2.

Chacune des bornes d'entrée E1 et E2 est couplée à la grille d'un transistor PMOS T1 ou T2 distinct et à la grille d'un transistor NMOS T3 ou T4 distinct.

Le circuit auxiliaire AUX est modifié par rapport au mode de réalisation précédent de manière à comprendre un deuxième transistor intermédiaire TN4 couplé entre le premier transistor intermédiaire TN3 et le deuxième transistor auxiliaire TN2.

La grille du premier transistor intermédiaire TN3 est couplée à la première borne d'entrée El, et la grille du deuxième transistor intermédiaire TN4 est couplée à la deuxième borne d'entrée E2.

Ainsi, lors d'une transition du signal présent sur la borne de sortie S, c'est-à-dire lorsque le couple de signaux sur le couple de bornes d'entrée E1-E2, passe d'un état bas-bas, bas-haut, ou haut-bas vers un état haut-haut, ou inversement, alors le premier transistor intermédiaire TN3, le deuxième transistor intermédiaire TN4 et le deuxième transistor auxiliaire TN2 changent d'état.

Et, si le premier transistor auxiliaire TP2, via le générateur de signal pseudo-aléatoire RDM, change d'état, ou s'il conserve un état passant, un pic de courant circule entre la première borne B1 et la deuxième borne B2. L'intensité de ce pic de courant dépend de la nature des commutations des transistors du circuit auxiliaire AUX.

Et plus particulièrement, lorsque le couple de signaux sur le couple de bornes d'entrée E1-E2, passe d'un état bas-bas, bas-haut, ou haut-bas vers un état haut-haut, et si le premier transistor auxiliaire TP2, via le générateur de signal pseudo-aléatoire RDM, passe d'un état bas à un état haut, alors un pic de courant de charge circule entre la première borne B1 et la masse de façon à charger le deuxième condensateur C2.

Ainsi lors de certaines transitions seulement, et donc de façon aléatoire, on génère un signal de bruit rendant plus difficile la détermination des opérations effectuées.

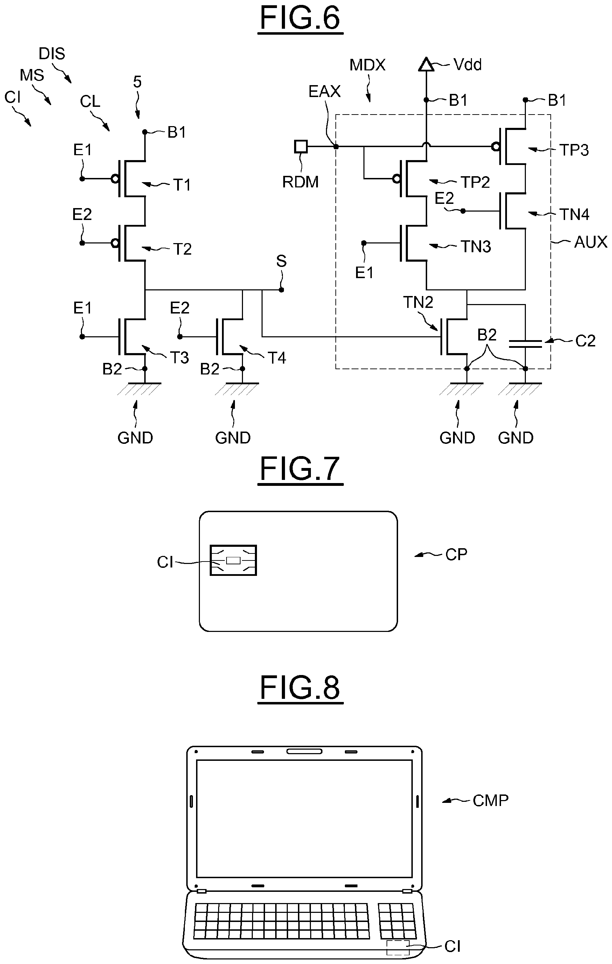

La figure 6 illustre un mode de réalisation de l'invention dans lequel le circuit logique CL est une porte NON-OU 5 comportant la première borne d'entrée E1 et une deuxième borne d'entrée E2.

La porte NON-OU 5 diffère classiquement de la porte NON-ET 4 de la figure 5 en ce que les deux transistors PMOS T1 et T2 sont couplés en série et les deux transistors NMOS T3 et T4 sont couplés en parallèle, les deux couples de transistor T1-T2 et T3-T4 étant couplés en série l'un avec l'autre.

Dans ce mode de réalisation, le circuit auxiliaire AUX est modifié par rapport au mode de réalisation décrit précédemment en lien avec la figure 4 de manière à ce qu'un troisième transistor auxiliaire TP3, ici un transistor PMOS, et le deuxième transistor intermédiaire TN4 soient montés en série entre la première borne B1 et le deuxième transistor NMOS TN2, et de façon à être montés en parallèle avec le premier transistor auxiliaire TP2 et le premier transistor intermédiaire TN3.

La grille du premier transistor auxiliaire TP2 et la grille du troisième transistor auxiliaire TP3 sont couplées au générateur de signal pseudo-aléatoire RDM.

La grille du premier transistor intermédiaire TN3 est couplée à la première borne d'entrée E1 et la grille du deuxième transistor intermédiaire TN4 est couplée à la deuxième borne d'entrée E2.

Ainsi, lors d'une transition du signal sur la borne de sortie S de la porte NON-OU 5, c'est-à-dire une transition du couple de signaux sur le couple d'entrées E1-E2 d'un état bas-bas vers un état bas-haut, haut-bas ou haut-haut, ou inversement, alors le premier transistor intermédiaire TN3 et/ou le deuxième transistor intermédiaire TN4 changent d'état.

Et, si le premier transistor auxiliaire TP2 et le troisième transistor auxiliaire TP3, via le générateur de signal pseudo-aléatoire RDM, changent d'état, ou s'ils conservent un état passant, un pic de courant circule entre la première borne B1 et la deuxième borne B2.

Et, plus particulièrement, lors d'une transition du couple de signaux sur le couple d'entrées E1-E2 d'un état bas-bas vers un état bas-haut, haut-bas ou haut-haut et si le premier transistor auxiliaire TP2 et le troisième transistor auxiliaire TP3 passe d'un état bloqué à un état passant, alors un pic de courant de charge circule entre la borne B1 et la masse GND, de façon à charger le deuxième condensateur C2.

Le circuit électronique intégré CI décrit précédemment et illustré aux figures 2 à 6 peut classiquement être intégré à un système comprenant une unité de traitement, classiquement dans une unité de traitement d'une carte à puce, d'un ordinateur, ou d'un terminal de téléphonie mobile, qui nécessitent la mise en œuvre d'opérations sécurisées.

Les figures 7 et 8 illustrent des systèmes informatiques comportant des unités de traitement sécurisées dans lesquelles sont incorporés des circuits intégrés CI selon un mode de réalisation de l'invention. La figure 7 illustre une carte à puce CP et la figure 8 illustre un ordinateur portable CMP. La carte à puce CP et l'ordinateur portable CMP comportent par exemple un microprocesseur comportant un circuit intégré selon un mode de réalisation de l'invention.

## Revendications

1. Procédé de gestion de la consommation en courant d'un circuit logique (CL) alimenté entre une première borne et une deuxième borne et comportant au moins une borne de sortie (S), dans lequel on génère ou non aléatoirement un courant supplémentaire entre la première borne et la deuxième borne lorsque le signal délivré par ladite au moins une borne de sortie (S) du circuit logique (CL) change d'état.

2. Dispositif électronique comprenant au moins un module (MS) contenant au moins un circuit logique (CL) qui comporte une première borne (B1) destinée à recevoir une tension d'alimentation (Vdd), une deuxième borne (B2) destinée à recevoir une tension de référence (GND), et au moins une borne de sortie (S), la borne de sortie (S) étant configurée pour délivrer un signal pouvant être dans un état haut ou un état bas, au moins un circuit auxiliaire (AUX) couplé entre la première borne (B1) et la deuxième borne (B2) et configuré pour générer ou non de façon aléatoire un courant supplémentaire entre la première borne (B1) et la deuxième borne (B2) à chaque changement d'état du signal sur la borne de sortie (S).

3. Dispositif selon la revendication 2, dans lequel le circuit logique (CL) comporte au moins une borne d'entrée (E), et dans lequel le circuit auxiliaire (AUX) comporte une borne d'entrée auxiliaire (EAX) configurée pour recevoir un signal pseudo-aléatoire (RDM) et comprend un premier transistor auxiliaire (TP2) dont l'électrode de commande est couplée à la borne d'entrée auxiliaire (EAX) et dont une première électrode est couplée à la première borne (B1), au moins un deuxième transistor auxiliaire (TN2) dont l'électrode de commande est couplée à la sortie du circuit logique, et au moins un transistor intermédiaire (TN3) couplé entre le premier transistor auxiliaire (TP2) et ledit au moins un deuxième transistor auxiliaire (TN2) et dont l'électrode de commande est couplée à ladite au moins une entrée (E).

4. Dispositif selon la revendication 3, dans lequel le premier transistor auxiliaire (TP2) est un transistor PMOS, et ledit au moins un deuxième transistor auxiliaire (TN2) et ledit au moins un transistor intermédiaire (TN3) sont des transistors NMOS.

5. Dispositif selon la revendication 3 ou 4, dans lequel ledit au moins un circuit logique (CL) est un inverseur (INV).

6. Dispositif selon la revendication 3 ou 4, dans lequel le circuit logique (CL) comporte plusieurs entrées (El, E2), et le circuit auxiliaire (AUX) comporte plusieurs transistors intermédiaire (TN3, TN4), chaque transistor intermédiaire ayant sa grille couplée à une entrée distincte (E1, E2) du circuit logique.

7. Dispositif selon la revendication 6, dans lequel les transistors intermédiaires (TN3, TN4) sont connectés en série entre le premier transistor auxiliaire (TP2) et ledit au moins un deuxième transistor auxiliaire (TN2).

8. Dispositif selon la revendication 7, dans lequel ledit au moins un circuit logique (CL) comporte une porte logique NON-ET (4), et le circuit auxiliaire comporte un premier transistor intermédiaire (TN3) dont l'électrode de commande est couplée à une première borne d'entrée (E1) de la porte NON-ET (4) et un deuxième transistor intermédiaire (TN4) dont l'électrode de commande est couplée à une deuxième borne d'entrée (E2) de la porte NON-ET (4), le premier transistor auxiliaire (TP2), le dit au moins un deuxième transistor auxiliaire (TN2), le premier transistor intermédiaire (TN3) et le deuxième transistor intermédiaire (TN4) étant connectés en série entre la première borne (B1) et la deuxième borne (B2).

9. Dispositif selon la revendication 6, dans lequel le circuit auxiliaire comprend un troisième transistor auxiliaire (TP3) dont l'électrode de commande est couplée à la borne d'entrée auxiliaire (EAX), et dans lequel les transistors intermédiaires (TN3, TN4) ont une première électrode mutuellement couplée et sont respectivement couplés en série avec les premier et troisième transistors auxiliaires (TP2, TP3).

10. Dispositif selon la revendication 9, dans lequel ledit au moins un circuit logique (CL) comporte une porte NON-OU (5), et le dispositif comporte le premier transistor intermédiaire (TN3) connecté en série avec le premier transistor auxiliaire (TP2) et dont l'électrode de commande est couplée à une première entrée (E1) de la porte NON-OU (5), un deuxième transistor intermédiaire (TN4) dont l'électrode de commande est couplée à une deuxième entrée (E2) de la porte NON-OU (5) et connecté en série avec le troisième transistor auxiliaire (TP3) dont l'électrode de commande est couplée au à la borne d'entrée auxiliaire (EAX), le premier transistor auxiliaire (TP2) et le premier transistor intermédiaire (TN3) étant montés en parallèle avec le troisième transistor auxiliaire (TP3) et le deuxième transistor intermédiaire (TN4) entre la borne d'alimentation (B1) et le premier transistor intermédiaire (TN3).

11. Dispositif selon l'une des revendications 2 à 10, comprenant plusieurs modules connectés.

12. Circuit intégré (CI) comprenant un dispositif selon l'une quelconque des revendications 2 à 11.

13. Système comprenant au moins un circuit intégré selon la revendication 12.

14. Système selon la revendication 13, formant une carte à puce (CP) ou un appareil informatique (CMP).

## Patentansprüche

1. Verfahren zur Verwaltung des Stromverbrauchs einer logischen Schaltung (CL), die zwischen einer ersten Klemme und einer zweiten Klemme gespeist wird und mindestens eine Ausgangsklemme (S) umfasst, wobei zwischen der ersten Klemme und der zweiten Klemme nach dem Zufallsprinzip ein zusätzlicher Strom erzeugt oder nicht erzeugt wird, wenn das von der mindestens einen Ausgangsklemme (S) der logischen Schaltung (CL) gelieferte Signal seinen Zustand ändert.

2. Elektronische Vorrichtung, die mindestens ein Modul (MS) umfasst, das mindestens eine logische Schaltung (CL) enthält, die eine erste Klemme (B1), welche dazu bestimmt ist, eine Speisespannung (Vdd) aufzunehmen, eine zweite Klemme (B2), welche dazu bestimmt ist, eine Referenzspannung (GND) aufzunehmen, und mindestens eine Ausgangsklemme (S) umfasst, wobei die Ausgangsklemme (S) dafür ausgebildet ist, ein Signal zu liefern, das sich in einem hohen Zustand oder einem niedrigen Zustand befinden kann, wobei mindestens eine Hilfsschaltung (AUX) zwischen die erste Klemme (B1) und die zweite Klemme (B2) geschaltet und dafür ausgebildet ist, bei jeder Zustandsänderung des Signals an der Ausgangsklemme (S) nach dem Zufallsprinzip einen zusätzlichen Strom zwischen der ersten Klemme (B1) und der zweiten Klemme (B2) zu erzeugen oder nicht zu erzeugen.

3. Vorrichtung nach Anspruch 2, wobei die logische Schaltung (CL) mindestens eine Eingangsklemme (E) umfasst, und wobei die Hilfsschaltung (AUX) eine Hilfseingangsklemme (EAX) umfasst, die dafür ausgebildet ist, ein pseudozufälliges Signal (RDM) aufzunehmen, und einen ersten Hilfstransistor (TP2), dessen Steuerelektrode mit der Hilfseingangsklemme (EAX) verschaltet ist und von dem eine erste Elektrode mit der ersten Klemme (B1) verschaltet ist, mindestens einen zweiten Hilfstransistor (TN2), dessen Steuerelektrode mit dem Ausgang der logischen Schaltung verschaltet ist, und mindestens einen Zwischentransistor (TN3) umfasst, der zwischen den ersten Hilfstransistor (TP2) und den mindestens einen zweiten Hilfstransistor (TN2) geschaltet ist und dessen Steuerelektrode mit dem mindestens einen Eingang (E) verschaltet ist.

4. Vorrichtung nach Anspruch 3, wobei es sich beim ersten Hilfstransistor (TP2) um einen PMOS-Transistor handelt, und es sich bei dem mindestens einen zweiten Hilfstransistor (TN2) und dem mindestens einen Zwischentransistor (TN3) um NMOS-Transistoren handelt.

5. Vorrichtung nach Anspruch 3 oder 4, wobei es sich bei der mindestens einen logischen Schaltung (CL) um einen Inverter (INV) handelt.

6. Vorrichtung nach Anspruch 3 oder 4, wobei die logische Schaltung (CL) mehrere Eingänge (E1, E2) umfasst, und die Hilfsschaltung (AUX) mehrere Zwischentransistoren (TN3, TN4) umfasst, wobei jeder Zwischentransistor sein Gate mit einem separaten Eingang (E1, E2) der logischen Schaltung verschaltet aufweist.

7. Vorrichtung nach Anspruch 6, wobei die Zwischentransistoren (TN3, TN4) zwischen dem ersten Hilfstransistor (TP2) und dem mindestens einen zweiten Hilfstransistor (TN2) in Reihe geschaltet sind.

8. Vorrichtung nach Anspruch 7, wobei die mindestens eine logische Schaltung (CL) ein logisches NICHT-UND-Gatter (4) umfasst, und die Hilfsschaltung einen ersten Zwischentransistor (TN3), dessen Steuerelektrode mit einer ersten Eingangsklemme (E1) des NICHT-UND-Gatters (4) verschaltet ist, und einen zweiten Zwischentransistor (TN4) umfasst, dessen Steuerelektrode mit einer zweiten Eingangsklemme (E2) des NICHT-UND-Gatters (4) verschaltet ist, wobei der erste Hilfstransistor (TP2), der mindestens eine zweite Hilfstransistor (TN2), der erste Zwischentransistor (TN3) und der zweite Zwischentransistor (TN4) zwischen der ersten Klemme (B1) und der zweiten Klemme (B2) in Reihe geschaltet sind.

9. Vorrichtung nach Anspruch 6, wobei die Hilfsschaltung einen dritten Hilfstransistor (TP3) umfasst, dessen Steuerelektrode mit der Hilfseingangsklemme (EAX) verschaltet ist, und wobei die Zwischentransistoren (TN3, TN4) eine erste, miteinander verschaltete Elektrode aufweisen, und jeweils mit dem ersten und dritten Hilfstransistor (TP2, TP3) in Reihe geschaltet sind.

10. Vorrichtung nach Anspruch 9, wobei die mindestens eine logische Schaltung (CL) ein NICHT-ODER-Gatter (5) umfasst, und die Vorrichtung den ersten Zwischentransistor (TN3) umfasst, der mit dem ersten Hilfstransistor (TP2) in Reihe geschaltet ist und dessen Steuerelektrode mit einem ersten Eingang (E1) des NICHT-ODER-Gates (5) verschaltet ist, einen zweiten Zwischentransistor (TN4), dessen Steuerelektrode mit einem zweiten Eingang (E2) des NICHT-ODER-Gates (5) verschaltet und der mit dem dritten Hilfstransistor (TP3) in Reihe geschaltet ist, dessen Steuerelektrode mit der Hilfseingangsklemme (EAX) verschaltet ist, wobei der erste Hilfstransistor (TP2) und der erste Zwischentransistor (TN3) mit dem dritten Hilfstransistor (TP3) und dem zweiten Zwischentransistor (TN4) zwischen der Speiseklemme (B1) und dem ersten Zwischentransistor (TN3) parallel geschaltet sind.

11. Vorrichtung nach einem der Ansprüche 2 bis 10, die mehrere verschaltete Module umfasst.

12. Integrierte Schaltung (CI), die eine Vorrichtung nach einem der Ansprüche 2 bis 11 umfasst.

13. System, das mindestens eine integrierte Schaltung nach Anspruch 12 umfasst.

14. System nach Anspruch 13, das eine Chipkarte (CP) oder ein IT-Gerät (CMP) bildet.

## Claims

1. A method for managing the current consumption of a logic circuit (CL) powered between a first terminal and a second terminal and including at least one output terminal (S), wherein an additional current is randomly generated or not between the first terminal and the second terminal when the signal output by said at least one output terminal (S) of the logic circuit (CL) changes state.

2. An electronic device comprising at least one module (MS) containing at least one logic circuit (CL) which includes a first terminal (B1) intended to receive a power voltage (Vdd), a second terminal (B2) intended to receive a reference voltage (GND), and at least one output terminal (S), the output terminal (S) being configured to output a signal which may be in a high state or a low state, at least one auxiliary circuit (AUX) coupled between the first terminal (B1) and the second terminal (B2) and configured to randomly generate or not an additional current between the first terminal (B1) and the second terminal (B2) at each change of state of the signal on the output terminal (S) .

3. The device according to claim 2, wherein the logic circuit (CL) includes at least one input terminal (E), and wherein the auxiliary circuit (AUX) includes an auxiliary input terminal (EAX) configured to receive a pseudo-random signal (RDM) and comprises a first auxiliary transistor (TP2) the control electrode of which is coupled to the auxiliary input terminal (EAX) and a first electrode of which is coupled to the first terminal (B1), at least one second auxiliary transistor (TN2) the control electrode of which is coupled to the output of the logic circuit, and at least one intermediate transistor (TN3) coupled between the first auxiliary transistor (TP2) and said at least one second auxiliary transistor (TN2) and the control electrode of which is coupled to said at least one input (E) .

4. The device according to claim 3, wherein the first auxiliary transistor (TP2) is a PMOS transistor, and said at least one second auxiliary transistor (TN2) and said at least one intermediate transistor (TN3) are NMOS transistors.

5. The device according to claim 3 or 4, wherein said at least one logic circuit (CL) is an inverter (INV).

6. The device according to claim 3 or 4, wherein the logic circuit (CL) includes several inputs (El, E2), and the auxiliary circuit (AUX) includes several intermediate transistors (TN3, TN4), each intermediate transistor having its gate coupled to a separate input (El, E2) of the logic circuit.

7. The device according to claim 6, wherein the intermediate transistors (TN3, TN4) are connected in series between the first auxiliary transistor (TP2) and said at least one second auxiliary transistor (TN2).

8. The device according to claim 7, wherein said at least one logic circuit (CL) includes a NAND logic gate (4), and the auxiliary circuit includes a first intermediate transistor (TN3) the control electrode of which is coupled to a first input terminal (E1) of the NAND gate (4) and a second intermediate transistor (TN4) the control electrode of which is coupled to a second input terminal (E2) of the NAND gate (4), the first auxiliary transistor (TP2), said at least one second auxiliary transistor (TN2), the first intermediate transistor (TN3) and the second intermediate transistor (TN4) being connected in series between the first terminal (B1) and the second terminal (B2).

9. The device according to claim 6, wherein the auxiliary circuit comprises a third auxiliary transistor (TP3) the control electrode of which is coupled to the auxiliary input terminal (EAX), and wherein the intermediate transistors (TN3, TN4) have a first electrode which is mutually coupled and are respectively coupled in series with the first and third auxiliary transistors (TP2, TP3).

10. The device according to claim 9, wherein said at least one logic circuit (CL) includes a NOR gate (5), and the device includes the first intermediate transistor (TN3) connected in series with the first auxiliary transistor (TP2) and the control electrode of which is coupled to a first input (E1) of the NOR gate (5), a second intermediate transistor (TN4) the control electrode of which is coupled to a second input (E2) of the NOR gate (5) and connected in series with the third auxiliary transistor (TP3) the control electrode of which is coupled to the auxiliary input terminal (EAX), the first auxiliary transistor (TP2) and the first intermediate transistor (TN3) being mounted in parallel with the third auxiliary transistor (TP3) and the second intermediate transistor (TN4) between the power terminal (B1) and the first intermediate transistor (TN3).

11. The device according to one of claims 2 to 10, comprising several connected modules.

12. An integrated circuit (IC) comprising a device according to any one of claims 2 to 11.

13. A system comprising at least one integrated circuit according to claim 12.

14. The system according to claim 13, forming an integrated circuit card (CP) or a computer apparatus (CMP).
